# EUROPEAN PATENT APPLICATION

(11) **EP 3 903 907 A1**
(43) Date of publication of application: **03.11.2021**
(21) Application number: 19902337.5
(22) Date of filing: 27.12.2019
(51) Int. Cl.: B01D 46/42, B60T 17/00, B01D 53/26

(54) **AIR SUPPLY SYSTEM**

(30) Priority: 28.12.2018 JP 2018246454
(71) Applicant: Nabtesco Automotive Corporation, Tokyo 102-0093 (JP)
(72) Inventor: SUGIO Takuya, Tokyo 102-0093 (JP)
(74) Representative: Grünecker Patent- und Rechtsanwälte PartG mbB
(86) International application number: PCT/JP2019/051356
(87) International publication number: WO 2020/138390

(57) **Abstract**

Provided is an air supply system that can suppress decreases in the performance of an air dryer. This air supply system performs a supply action in which compressed air supplied from a compressor (4) is made to flow from upstream to downstream via an air dryer (11) that has a filter (17) and a check valve (19). This air supply system is provided with an ECU (80) that switches between the supply action and a non-supply action in which the compressed air is not supplied upstream of the check valve (19) and, during the non-supply action, performs a regeneration action in which the filter (17) is regenerated. The ECU (80) is provided with a supply start value at which the supply action is begun and a supply start condition for starting the supply action even if detected air pressure is higher than the supply start value.

## Description

### TECHNICAL FIELD

The present invention relates to an air supply system that supplies compressed air to a device.

### BACKGROUND ART

Vehicles such as trucks, buses, and construction machines use compressed air delivered from a compressor to control pneumatic systems such as brakes and suspensions. The compressed air contains liquid impurities such as water, which is contained in the atmosphere, and oil for lubricating the interior of the compressor. When entering inside a pneumatic system, compressed air containing a large amount of water and oil causes rust and swelling of rubber members. This results in an operational defect. For this reason, an air dryer is provided downstream of the compressor to remove impurities such as water and oil from the compressed air.

The air dryer performs a dehumidifying operation to remove oil and water from the compressed air, and a regenerating operation to remove oil and water absorbed by the desiccant and to discharge oil and water to the outside as collected liquid. For example, Patent Document 1 discloses a technique by which an air dryer performs the regenerating operation.

The air supply system disclosed in Patent Document 1 stores air compressed by an air compressor in an air tank. When the air pressure in the air tank is less than or equal to a first pressure, the air supply system drives the air compressor to supply compressed air to the air tank until the air pressure increases and reaches a second pressure. When the air pressure reaches the second pressure, the air supply system stops the supply of compressed air to the air tank by the air compressor, and opens a discharge valve (purge valve). Thereafter, the air supply system maintains the discharge valve in the opened state until the air pressure decreases to a third pressure, thereby performing the regenerating operation, in which the compressed air in the air tank is caused to flow through the air dryer and is discharged to the atmosphere. The air supply system closes the discharge valve when the air pressure in the air tank reaches the third pressure.

### PRIOR ART DOCUMENT

### Patent Document

Patent Document 1: Japanese Laid-Open Patent Publication No. 2015-229127

### SUMMARY OF THE INVENTION

### Problems that the Invention is to Solve

The air supply system disclosed in Patent Document 1 performs the regenerating operation after increasing the air pressure to the second pressure, which is greater than the third pressure suitable to be supplied to a device. Accordingly, in this air supply system, the compressor continues to operate until the air pressure in the air tank exceeds the third pressure, which is the maximum pressure during the use, and reaches the second pressure, which is a supply stop pressure greater than the third pressure. The amount of airflow through the air dryer increases in accordance with the operation of the compressor being continued until the pressure changes from the third pressure to the second pressure. This may reduce the dehumidification performance of the air dryer.

Accordingly, it is an objective of the present invention to provide an air supply system that is capable of limiting reduction in the performance of an air dryer.

### Means for Solving the Problems

To achieve the forgoing objective, an air supply system is provided that performs a supplying operation that causes compressed air supplied from a compressor to flow from an upstream side to a downstream side via an air dryer including a filter and a check valve. The air supply system includes a pressure sensor that detects an air pressure on a downstream side of the check valve, a controller that switches between the supplying operation and a non-supplying operation, and performs a regenerating operation, which regenerates the filter, during the non-supplying operation. The controller stores a supply start value. The supplying operation is started based on a comparison between the supply start value and a detected air pressure detected by the pressure sensor. The controller further stores a supply start condition. If the supply start condition is satisfied, the supplying operation is started even if the detected air pressure is greater than the supply start value.

With this configuration, the supplying operation is started before the detected air pressure becomes the supply start value. This reduces the amount of air passing through the filter, resulting in a reduced amount of oil and water accumulated in the filter. Also, since the regenerating operation is performed while the accumulation of oil and water is still low, the filter is regenerated at a high level. Also, since the regenerating operation is performed while the accumulation of oil and water is low, oil and water are prevented from being stuck to the filter. This limits the reduction in the performance of the air dryer.

Further, the supply stop value is not changed, and the supplying operation is performed even when the detected air pressure is greater than the supply start value. This allows the regeneration performance to be delivered as in a normal operation in the regenerating operation, which is somewhat affected by air pressure.

According to one embodiment, the supply start condition may include that a duration of the non-supplying operation is longer than a predetermined amount of time.

This configuration performs the regenerating operation periodically even in a situation in which the used amount of compressed air is small.

According to one embodiment, the supply start condition may further include that the detected air pressure is greater than the supply start value and less than a supply stop value. The supply stop value may be greater than the supply start value, and the non-supplying operation may be started based on a comparison between the supply stop value and the detected air pressure.

This configuration prevents compressed air from being supplied when the compressed air is not being consumed.

According to one embodiment, the supply start condition may include that a current traveling state is a traveling state that consumes a small amount of air, and that the detected air pressure is less than or equal to a predetermined air pressure that is greater than the supply start value.

This configuration limits the reduction in the performance of the filter in accordance with the current traveling state.

According to one embodiment, the controller may determine that the current traveling state is the traveling state that consumes a small amount of air based on a small amount of reduction of the detected air pressure per unit time.

This configuration is capable of determining the current traveling state based on the amount of decrease per unit time of the detected air pressure.

According to one embodiment, the controller may determine that the current traveling state is the traveling state that consumes a small amount of air based on a signal transmitted from a controller for a vehicle.

This configuration is capable of determining a traveling state in which the amount of reduction of the air pressure is small based on the signal transmitted from the vehicle.

According to one embodiment, an air tank may be disposed on the downstream side of the check valve, and the detected air pressure may be an air pressure in the air tank.

This configuration is capable of controlling the supplying operation, the non-supplying operation, and the regenerating operation based on the air pressure in the air tank.

### BRIEF DESCRIPTION OF THE DRAWINGS

Fig. 1 is a block diagram schematically showing the configuration of an air supply system according to an embodiment used in a pneumatic system.
Fig. 2 is a diagram schematically showing the air supply system of the embodiment.
Fig. 3A is a diagram showing an operational mode of the air dryer of the embodiment, illustrating a supplying operation.
Fig. 3B is a diagram showing an operational mode of the air dryer of the embodiment, illustrating a purging operation.
Fig. 3C is a diagram showing an operational mode of the air dryer of the embodiment, illustrating a regenerating operation.
Fig. 4 is a graph showing an air supplying state of the embodiment in terms of air pressure.

### MODES FOR CARRYING OUT THE INVENTION

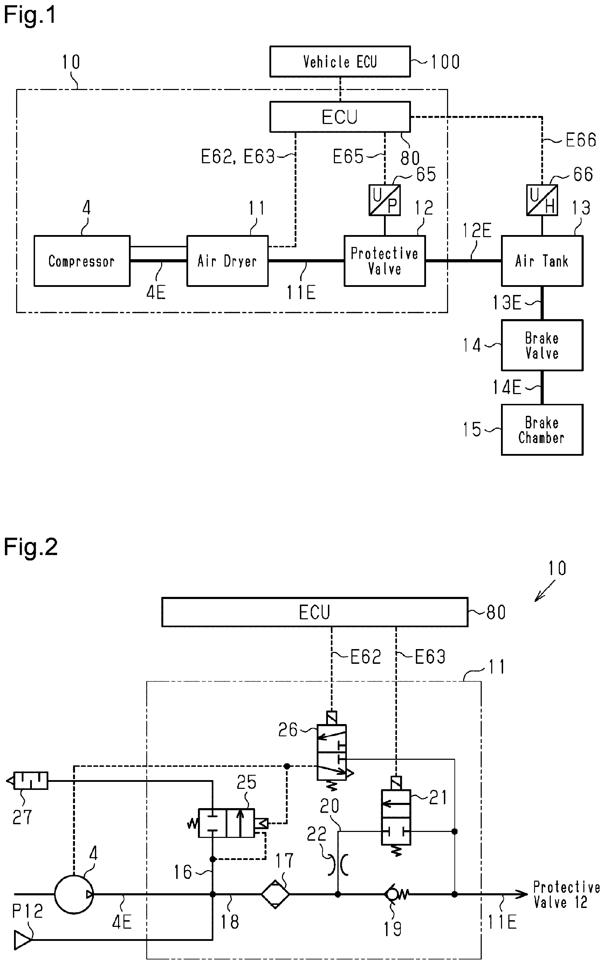

An air supply system according to an embodiment in a pneumatic system will be described with reference to Figs. 1 to 4. The air supply system is mounted on an automobile such as a truck, a bus, or a construction machine.

With reference to Fig. 1, a schematic configuration of the pneumatic system will be described.

The pneumatic system includes a compressor 4, an air dryer 11, a protective valve 12, an air tank 13, a brake valve 14, and a brake chamber 15, which are connected sequentially by air supply paths 4E, 11E, 12E, 13E, and 14E. Among these components, the compressor 4, the air dryer 11, and the protective valve 12 are included in an air supply system 10.

The compressor 4 is driven by a force of the engine (not shown) of the automobile to compress air and supply compressed air to the air supply system 10. The compressor 4 is connected to the air dryer 11 via the air supply path 4E.

In the air dryer 11, the air delivered from the compressor 4 passes through a filter 17 (refer to Fig. 2), so that impurities in the air are trapped, so that the air is cleaned. The thus cleaned air is supplied to the air tank 13 from the air dryer 11 via the air supply path 11E, the protective valve 12 and the air supply path 12E.

The air tank 13 is connected to the brake valve 14, which is operated by a driver, via the air supply path 13E. The brake valve 14 is connected to the brake chamber 15 via the air supply path 14E. Thus, in response to the operation of the brake valve 14, air is supplied to the brake chamber 15, so that a service brake is activated.

The air supply system 10 includes an ECU 80, which serves as a controller. The ECU 80 is electrically connected to the air dryer 11 via wires E62, E63. Also, the ECU 80 is electrically connected to a pressure sensor 65 via a wire E65. The ECU 80 detects an air pressure at the protective valve 12 using the pressure sensor 65. A detected air pressure, which corresponds to the air pressure in the air tank 13, is acquired from the detection signal of the pressure sensor 65. The ECU 80 is connected to a temperature-humidity sensor 66 via a wire E66. The ECU 80 detects the humidity of the compressed air in the air tank 13 using the temperature-humidity sensor 66. Further, the ECU 80 is electrically connected to a vehicle ECU 100 so as to acquire various signals in the vehicle on which the air supply system 10 is mounted.

The ECU 80 includes a computation unit, a volatile storage unit, and a non-volatile storage unit (none of which is shown), and delivers signals specifying actions to the air dryer 11 in accordance with programs stored in the non-volatile storage unit.

The air supply system 10 will be described with reference to Fig. 2.

The air dryer 11 includes a maintenance port P12. The maintenance port P12 is used to supply air to a section upstream of the filter 17 of the air dryer 11 during maintenance.

The ECU 80 is electrically connected to a regeneration control valve 21 of the air dryer 11 via the wire E63, and is electrically connected to a governor 26 of the air dryer 11 via the wire E62.

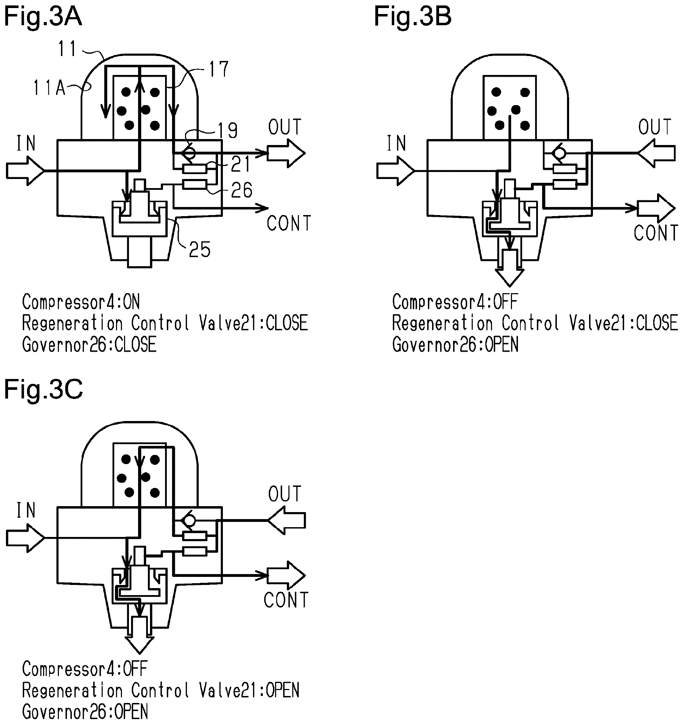

With reference to Figs. 3A to 3C, the air dryer 11 includes the filter 17 in an internal space 11A. The filter 17 is disposed in an air supply passage 18. The air supply passage 18 connects the air supply path 4E, which extends from the compressor 4 on the upstream side, to the air supply path 11E, which is connected to the protective valve 12 on the downstream side.

The filter 17 accommodates a desiccant and includes a filtering unit. The filter 17 causes air to pass through the desiccant so as to remove water contained in the air, thereby drying the air, and removes oil contained in the air using the filtering unit so as to clean the air. The air that has passed through the filter 17 is supplied to the protective valve 12 via a check valve 19, which permits the air from the filter 17 to flow only to the downstream side. Assuming that the filter 17 is disposed on the upstream side, and the protective valve 12 is disposed on the downstream side, the check valve 19 permits air to flow only from the upstream side to the downstream side.

Referring to Fig. 2, a bypass passage 20, which bypasses the check valve 19, is disposed to be parallel with the check valve 19. The regeneration control valve 21 is connected to the bypass passage 20.

The regeneration control valve 21 is an electromagnetic valve controlled by the ECU 80. The ECU 80 controls energization/de-energization (activation/deactivation) of the regeneration control valve 21 via the wire E63, thereby switching the operation of the regeneration control valve 21. In a de-energized state, the regeneration control valve 21 is closed to block the bypass passage 20. In an energized state, the regeneration control valve 21 is open to open the bypass passage 20. For example, the regeneration control valve 21 is activated when the value of the detected air pressure exceeds a supply stop value.

The bypass passage 20 includes an orifice 22 between the regeneration control valve 21 and the filter 17. When the regeneration control valve 21 is energized, the compressed air in the air tank 13 is delivered to the filter 17 through the protective valve 12 and via the bypass passage 20 with the flow rate being regulated by the orifice 22. The compressed air delivered to the filter 17 flows backward from the downstream side to the upstream side through the filter 17. This process is designed to regenerate the filter 17 and is referred to as a regeneration process of an air dryer. At this time, the compressed air in the air tank 13, which has been dried and cleaned, flows backward through the filter 17, thereby removing trapped water and oil from the filter 17. For example, the regeneration control valve 21 is controlled to be open for a predetermined amount of time. The predetermined amount of time is an amount of time that allows the filter 17 to be regenerated, and is set logically, experimentally, or empirically.

A branch passage 16 branches off a section between the compressor 4 and the filter 17. A drain valve 25 is disposed on the branch passage 16, and a drain port 27 is connected to the end of the branch passage 16.

Collected liquid, which contains water and oil removed from the filter 17, is delivered to the drain valve 25 together with compressed air. The drain valve 25 is a pneumatic valve driven by air pressure and is disposed in a section of the branch passage 16 between the filter 17 and the drain port 27. The drain valve 25 is a two-port two-position valve, which changes the position between a closed position and an open position. The drain valve 25 delivers collected liquid to the drain port 27 when in the open position. The collected liquid discharged from the drain port 27 may be recovered by an oil separator (not shown).

The drain valve 25 is controlled by the governor 26. The governor 26 is an electromagnetic valve controlled by the ECU 80. The ECU 80 controls energization/deenergization (activation/deactivation) of the governor 26 via the wire E62, thereby switching the operation of the governor 26. When energized, the governor 26 delivers an unload signal of a predetermined air pressure to the drain valve 25, thereby opening the drain valve 25. When de-energized, the governor 26 does not deliver the unload signal to the drain valve 25, thereby exposing the port of the drain valve 25 to the atmospheric pressure, thereby closing the drain valve 25.

The drain valve 25 is maintained in the closed position when receiving no unload signal from the governor 26. The drain valve 25 is switched to the open position when receiving the unload signal from the governor 26. Further, when the pressure at the input port of the drain valve 25, which is connected to the compressor 4, is increased beyond an upper limit, the drain valve 25 is forcibly switched to the open position.

The compressor 4 performs a load operation to supply compressed air and a no-load operation to supply no compressed air. The governor 26 controls switching between the load operation and the no-load operation of the compressor 4. When energized, the governor 26 delivers an unload signal to the compressor 4 so as to cause the compressor 4 to perform the no-load operation. When de-energized, the governor 26 does not deliver the unload signal to the compressor 4 and exposes the port of the compressor 4 to the atmosphere, so as to cause the compressor 4 to perform the load operation.

The ECU 80 energizes (activates) the governor 26 based on the detected air pressure of the pressure sensor 65, thereby switching the governor 26 to a supply position, at which the governor 26 outputs the unload signal. Also, the ECU 80 de-energizes (deactivates) the governor 26 based on the detected air pressure of the pressure sensor 65, thereby switching the governor 26 to a non-supply position, at which the governor 26 does not output the unload signal.

Referring to Figs. 3A to 3C, a supplying operation, a purging operation, and a regenerating operation of the air dryer 11 will be described. The supplying operation is an operation that supplies compressed air to the air tank 13. The purging operation is an operation in which the compressor is put in a stopped state in order to execute a purging process and the like. The regenerating operation is an operation that performs a regeneration process of the filter 17. The regenerating operation and the purging operation are included in the non-supplying operation.

With reference to Fig. 3A, during the supplying operation, the ECU 80 closes the regeneration control valve 21 and the governor 26 (indicated by CLOSE in the drawing). At this time, the regeneration control valve 21 and the governor 26 do not receive drive signals (power) from the ECU 80. Thus, the governor 26 exposes the ports of the compressor 4 and the drain valve 25, which are located downstream of and connected to the governor 26, to the atmosphere. In the supplying operation, the compressor 4 supplies compressed air (indicated by ON in the drawing). The compressed air supplied to the air dryer 11 (indicated by IN in the drawing) is supplied to the air tank 13 (indicated by OUT in the drawing) via the protective valve 12 after the filter 17 removes water and oil from the compressed air.

With reference to Fig. 3B, during the purging operation, the ECU 80 closes the regeneration control valve 21 and opens the governor 26 (indicated by OPEN in the drawing). At this time, the governor 26 receives a drive signal (power) from the ECU 80 and opens, thereby connecting the ports of the compressor 4 and the drain valve 25, which are located downstream of and connected to the governor 26, to the upstream side (the protective valve 12). In the purging operation, the unload signal from the governor 26 (indicated by CONT in the drawing) puts the compressor 4 in the no-load operation state (indicated by OFF in the drawing). Also, the compressed air in the filter 17 and the air supply passage 18 is discharged from the drain port 27 together with water and oil.

With reference to Fig. 3C, during the regenerating operation, the ECU 80 opens the regeneration control valve 21 and the governor 26. At this time, the regeneration control valve 21 and the governor 26 receive a drive signal (power) from the ECU 80. In the regenerating operation, the unload signal from the governor 26 puts the compressor 4 in the no-load operation state. In the regenerating operation, the regeneration control valve 21 and the drain valve 25 are opened, so that the compressed air in a section on the side of the filter 17 that corresponds to the protective valve 12 flows backward from the downstream side to the upstream side through the filter 17 (the accommodated desiccant). Accordingly, the regeneration process of the filter 17 is performed.

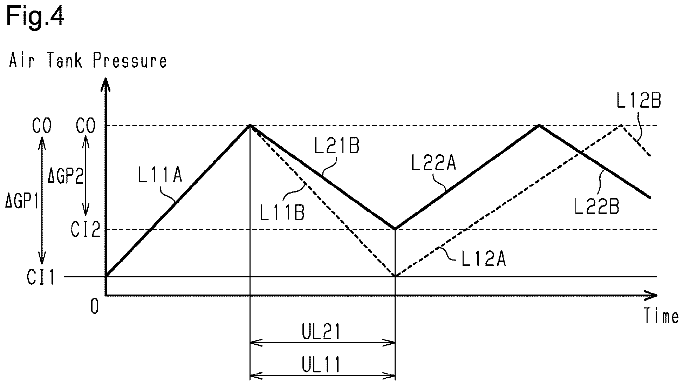

An operation of the air supply system 10 will now be described with reference to Fig. 4.

The ECU 80 stores a supply start value Cl1, which corresponds to the air pressure at which the compressor 4 is caused to start supplying air, and a supply stop value CO, which corresponds to the air pressure at which the supply of air by the compressor 4 is stopped. Also, the ECU 80 has an auxiliary supply start value Cl2, which is less than the supply stop value CO and greater than the supply start value Cl1. For example, the supply stop value CO, the supply start value Cl1, and the auxiliary supply start value CI2 may be stored in the non-volatile storage unit of the ECU 80.

The ECU 80 compares the detected air pressure, which has been detected by the pressure sensor 65, with the supply start value Cl1. When the detected air pressure becomes less than or equal to the supply start value Cl1 (left end of L11A in the graph), the ECU 80 switches the air dryer 11 to the supplying operation so as to supply compressed air to the air tank 13. This opens the governor 26 of the air dryer 11 and thus stops output of the unload signal. The compressor 4 performs the load operation in response to the stopping of the unload signal. As the supplying operation of the air dryer 11 continues, the detected air pressure of the air tank 13 increases (L11A in the graph).

When the detected air pressure becomes greater than or equal to the supply stop value CO (right end of L11A in the graph) due to the supply of compressed air, the ECU 80 switches the air dryer 11 to the regenerating operation. This opens the regeneration control valve 21 of the air dryer 11, allowing the compressed air to flow backward from the protective valve 12. The governor 26 of the air dryer 11 is also opened, so that the unload signal is output. The compressor 4 performs the no-load operation in response to the input of the unload signal. Also, in the air dryer 11, the governor 26 outputs the unload signal to the drain valve 25. The drain valve 25 is opened in response to the input of the unload signal, so that the air in the filter 17 of the air dryer 11 is caused to flow in a regeneration direction by the compressed air, which flows backward through the regeneration control valve 21. The regeneration direction refers to a direction from the downstream side to the upstream side and is opposite to a supplying direction, which is the direction of the flow of air when the air is cleaned. As a result, impurities trapped by the filter 17 are discharged as collected liquid from the drain valve 25 together with the air flowing in the regeneration direction, so that the filter 17 is regenerated (left ends of L11B and L21B in the graph).

When the filter 17 is regenerated in this manner, the compressor 4 is performing the no-load operation in response to the input of the unload signal. The compressed air is therefore not consumed wastefully.

Thereafter, when the regeneration process is ended, the ECU 80 switches the air dryer 11 to the purging operation. This stops the flow of the compressed air from the air tank 13, so that the compressed air does not flow through the filter 17. When the compressed air in the air tank 13 is consumed in the brake chamber 15, the air pressure of the air tank 13 decreases, accordingly (L11B, L21B, and the like in the graph).

First, a normal operation will be described, in which the supplying operation is started when the compressed air is consumed until the air pressure becomes the supply start value Cl1.

When determining that the detected air pressure is less than or equal to the supply start value Cl1 (L11B in the graph), the ECU 80 switches the air dryer 11 to the supplying operation again, so as to stop the unload signal to the compressor 4, thereby supplying air (L12A in the graph). Thereafter, when the detected air pressure becomes greater than or equal to the supply stop value CO (right end of L12A in the graph), the ECU 80 switches the air dryer 11 from the supplying operation to the non-supplying operation. Accordingly, the air pressure decreases (L12B in the graph). An example assumes that, on L11B in the graph, it takes a predetermined amount of time UL11 for the detected air pressure to decrease from the supply stop value CO to the supply start value Cl1. That is, the duration of the non-supplying operation is the predetermined amount of time UL11. The predetermined amount of time UL11 is the amount of time taken by the air pressure to decrease from the supply stop value CO to the supply start value Cl1, and accounts for most of the time periods during which air is consumed in the vehicle. The "most of the time periods" refers to 95% or more, for example.

Next, an operation will be described in which the supplying operation is started when compressed air is consumed until the detected air pressure becomes the auxiliary supply start value Cl2. In this operation, the regeneration process of the filter 17 is performed at a high level. This operation will thus be referred to as a high-level regenerating operation.

In the present embodiment, even in a case in which the detected air pressure is greater than the supply start value Cl1, the ECU 80 switches the air dryer 11 to the supplying operation so as to stop the unload signal to the compressor 4 in response to a supply start condition being satisfied, thereby supplying air.

A first supply start condition is that, as indicated by L21B in the graph, the consumption of air pressure is less than the normal air consumption indicated by L11B in the graph. For example, in the vehicle, when an amount of time UL21, which is the duration of the non-supplying operation from the supply stop value CO, is longer than, for example, the predetermined amount of time UL11 (that is, the amount of time taken by the air pressure to decrease from the supply stop value CO to the supply start value Cl1), the ECU 80 determines that the consumption of the air pressure is low. In this case, the first supply start condition is satisfied. In response to the first supply start condition being satisfied, the high-level regenerating operation is started. That is, the ECU 80 switches the air dryer 11 to the supplying operation so as to supply compressed air to the air tank 13.

That is, the amount of time UL21 from the supply stop value CO becomes longer than the predetermined amount of time UL11 as indicated by L21B in the graph (right end of L21B in the graph), the ECU 80 again switches the air dryer 11 to the supplying operation to stop the unload signal to the compressor 4, thereby supplying compressed air (L22A in the graph). When the air pressure detected by the pressure sensor 65 becomes greater than or equal to the supply stop value CO (right end of L22A in the graph), the ECU 80 switches the air dryer 11 to the non-supplying operation. Accordingly, the air pressure decreases (L22B in the graph).

Therefore, even if the consumption of compressed air is low, supply of air and the regeneration process are performed together each time the predetermined amount of time UL11 elapses, so that the regeneration process of the filter 17 is performed. The amount of compressed air that passes through the filter 17 corresponds to a differential pressure ΔGP2. The differential pressure ΔGP2 is less than a normal differential pressure ΔGP1, and the amount of compressed air corresponding to the differential pressure ΔGP2 is less than that corresponding to the differential pressure ΔGP1. Thus, the regeneration process is performed in the filter 17 when the collected amount of oil and water is still small, allowing the filter 17 to be regenerated at a higher level. Also, the differential pressure of the air tank 13 is limited to the differential pressure ΔGP2, which is less than the normal differential pressure ΔGP1, and the amount of compressed air corresponding to the differential pressure ΔGP2 is less than that corresponding to the differential pressure ΔGP1. This reduces the load on the compressor 4 when supplying compressed air. The predetermined amount of time UL11 is preferably set to ensure a cycle with which the operation intervals of the compressor 4 do not apply load on the compressor 4. Further, the supply stop value CO is equal to the value in the case of the normal operation. This allows the regeneration performance to be delivered as in a normal operation in the regenerating operation, which is somewhat affected by air pressure.

A second supply start condition may be employed in which the air pressure is less than or equal to the auxiliary supply start value Cl2, which is greater than the supply start value Cl1 and less than the supply stop value CO, and the supply of air may be performed when both the first and second supply start conditions are satisfied. In this configuration, if the consumption of compressed air is significantly low, the execution time of the supply of air and the regeneration process is limited, reducing the load on the compressor 4. The differential pressure ΔGP2 is preferably set such that the load on the compressor 4 is not increased by a short-time operation.

As described above, the present embodiment has the following advantages.
(1) The supplying operation is started before the detected air pressure becomes the supply start value Cl1. This reduces the amount of air passing through the filter 17, resulting in a reduced amount of oil and water accumulated in the filter 17. Since the regenerating operation is performed while the accumulation of oil and water is still low, the filter 17 is regenerated at a high level. Also, since the regenerating operation is performed while the accumulation of oil and water is low, oil and water are prevented from being stuck to the filter 17. This limits the reduction in the performance of the air dryer 11.
   Further, the supply stop value CO is not changed, and the supplying operation is performed even when the detected air pressure is greater than the supply start value Cl1. This allows the regeneration performance to be delivered as in a normal operation in the regenerating operation, which is somewhat affected by air pressure.
(2) The regenerating operation of the filter 17 is performed periodically even in a situation in which the used amount of compressed air is small.
(3) Compressed air is prevented from being supplied when the compressed air is not being consumed.
(4) The supply start condition includes that the current traveling state is a traveling state that consumes a small amount of air (that is, the vehicle is in a traveling state that consumes a small amount of air), and that the detected air pressure is less than or equal to the auxiliary supply start value Cl2, which is greater than the supply start value Cl1. This prevents the performance of the air dryer 11 from being reduced in accordance with the current traveling state.

The above-described embodiment may be modified as follows. The above-described embodiment and the following modifications can be combined as long as the combined modifications remain technically consistent with each other.

The air tank 13 may supply compressed air to devices that consume compressed air other than the brake valve 14, for example, to a parking brake.

The pressure sensor 65 may detect the air pressure at any position that is downstream of the check valve 19 as long as the pressure sensor 65 can detect an air pressure that corresponds to the air pressure of the air tank 13. For example, the pressure sensor may detect the air pressure in the air tank. In this case, the supplying operation, the non-supplying operation, and the regenerating operation may be controlled based on the detected air pressure in the air tank.

The ECU 80 may determine the traveling state that consumes a small amount of air based on a signal transmitted from the vehicle ECU 100, which is the controller for the vehicle. In this case, it is possible to determine a traveling state in which the amount of reduction of the air pressure is small based on the signal transmitted from the vehicle.

The ECU 80 may determine the traveling state that consumes a small amount of air based on a small amount of reduction of the detected air pressure per unit time. In this case, the current traveling state can be determined based on the amount of decrease per unit time of the detected air pressure.

In the above-described embodiment, the filter 17 includes both the desiccant and the filtering unit. However, the filter 17 may include only one of these.

Although the above-described embodiment describes a case in which the filter 17 is provided, an oil mist separator may be provided on the upstream side of the filter 17.

The oil mist separator includes a filter that performs gas/liquid separation through collision with compressed air, thereby trapping oil contained in the compressed air delivered from the compressor 4. The filter may be formed by stamping metal. Alternatively, the filter may be made of porous material such as sponge. The oil mist separator further improves the cleaning performance for compressed air.

In the above-described embodiment, the air supply system 10 is described as a system employed in an automobile such as a truck, a bus, or a construction machine. Alternatively, the air supply system may be mounted on other vehicles such as passenger cars, railway vehicles, or the like.

### DESCRIPTION OF THE REFERENCE NUMERALS

4...Compressor; 10...Air Supply System; 11...Air Dryer; 11A...Internal Space; 12...Protective Valve; 13...AirTank; 14...Brake Valve; 4E, 11E, 12E, 13E, 14E...Air Supply Paths; 15...Brake Chamber; 16...Branch Passage; 17...Filter; 18...Air Supply Passage; 19...Check Valve; 20...Bypass Passage; 21...Regeneration Control Valve; 22...Orifice; 25...Drain Valve; 26...Governor; 27...Drain Port; 65...Pressure Sensor; 66...Temperature-Humidity Sensor; 80...ECU; 100...Vehicle ECU; E62, E63, E65, E66...Wires; P12...Maintenance Port

## Claims

1. An air supply system that performs a supplying operation that causes compressed air supplied from a compressor to flow from an upstream side to a downstream side via an air dryer including a filter and a check valve, the air supply system comprising:
a pressure sensor that detects an air pressure on a downstream side of the check valve; and
a controller that switches between the supplying operation and a non-supplying operation, and performs a regenerating operation, which regenerates the filter, during the non-supplying operation, wherein
the controller stores a supply start value, the supplying operation being started based on a comparison between the supply start value and a detected air pressure detected by the pressure sensor, and
the controller further stores a supply start condition, wherein, if the supply start condition is satisfied, the supplying operation is started even if the detected air pressure is greater than the supply start value.

2. The air supply system according to claim 1, wherein the supply start condition includes that a duration of the non-supplying operation is longer than a predetermined amount of time.

3. The air supply system according to claim 2, wherein the supply start condition further includes that the detected air pressure is greater than the supply start value and less than a supply stop value, the supply stop value being greater than the supply start value, and the non-supplying operation is started based on a comparison between the supply stop value and the detected air pressure.

4. The air supply system according to claim 1, wherein the supply start condition includes that a current traveling state is a traveling state that consumes a small amount of air, and that the detected air pressure is less than or equal to a predetermined air pressure that is greater than the supply start value.

5. The air supply system according to claim 4, wherein the controller determines that the current traveling state is the traveling state that consumes a small amount of air based on a small amount of reduction of the detected air pressure per unit time.

6. The air supply system according to claim 4, wherein the controller determines that the current traveling state is the traveling state that consumes a small amount of air based on a signal transmitted from a controller for a vehicle.

7. The air supply system according to any one of claims 1 to 6, wherein
an air tank is disposed on the downstream side of the check valve, and
the detected air pressure is an air pressure in the air tank.
